(19) Europäisches Patentamt
European Patent Office
Office européen des brevets

(11) EP 4 715 020 A1

# (12) EUROPEAN PATENT APPLICATION

published in accordance with Art. 153(4) EPC

(43) Date of publication:
**25.03.2026 Bulletin 2026/13**

(21) Application number: **24807178.9**

(22) Date of filing: **13.05.2024**

(51) International Patent Classification (IPC):
***C09J 105/00*** *(2006.01)* ***C08B 37/00*** *(2006.01)*

(52) Cooperative Patent Classification (CPC):
**C08B 37/00; C09J 105/00**

(86) International application number:
**PCT/JP2024/017581**

(87) International publication number:
**WO 2024/237226 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.05.2023 JP 2023081380**

(71) Applicant: **National Institute of Advanced Industrial Science and Technology
Chiyoda-ku
Tokyo 100-8921 (JP)**

(72) Inventors:
- **SHIBAKAMI, Motonari
Tsukuba-shi, Ibaraki 305-8560 (JP)**
- **MIKI, Tsunehisa
Tsukuba-shi, Ibaraki 305-8560 (JP)**
- **SEKI, Masako
Tsukuba-shi, Ibaraki 305-8560 (JP)**
- **ABE, Mitsuru
Tsukuba-shi, Ibaraki 305-8560 (JP)**
- **HORIYAMA, Hiroaki
Tsukuba-shi, Ibaraki 305-8560 (JP)**

(74) Representative: **Latscha Schöllhorn Partner AG
Grellingerstrasse 60
4052 Basel (CH)**

## (54) HOT-MELT ADHESIVE

(57) Provided is a hot-melt adhesive that has high sustainability and excellent adhesiveness. The hot-melt adhesive comprises a β-1,3-glucan derivative and has a compressive shear bond strength in a specific range for a piece of wood.

EP 4 715 020 A1

## Description

### TECHNICAL FIELD

The present invention relates to a hot-melt adhesive. Moreover, the present invention relates to a method for producing a hot-melt adhesive.

### BACKGROUND

Hot-melt adhesives are adhesives that bond various materials, such as plastics, metals, ligneous materials, paper, and coated surfaces by utilizing a heating and melting-cooling and solidifying cycle using thermoplastic polymers that are solid at ambient temperature and become liquids at high temperatures. Hot-melt adhesives are free of volatile solvents and are thus very safe. Moreover, due to their excellent properties such as lack of dryness-induced shrinkage, hot-melt adhesives are widely used in industries.

In general, hot-melt adhesives use, as raw materials, petroleum-based resins such as ethylene vinyl acetate copolymers (EVA), olefins, synthetic rubber, polyamides, and polyesters. However, petroleum-based resins impose a great burden on the environment and are resins of fossil resources for which there are concerns of being depleted in the near future. Therefore, there is a demand for hot-melt adhesives that use highly sustainable raw materials instead of petroleum-based resins.

Patent Document 1 describes an adhesive and a sticky agent that use, as raw materials, derivatives of paramylon, which is a naturally derived biomass resource. The adhesive and the sticky agent are particularly useful with respect to bonding or sticking plastic materials such as polyethylene terephthalate.

Patent Document 1: JP 2018-154723 A

### SUMMARY OF INVENTION

The objective of the present invention is to provide a hot-melt adhesive that has high sustainability and excellent adhesiveness.

That is, according to the present invention, the following aspects are provided.

(1) A hot-melt adhesive, including a β-1,3-glucan derivative having a structure represented by Formula (I) below:

[Chem. 1]

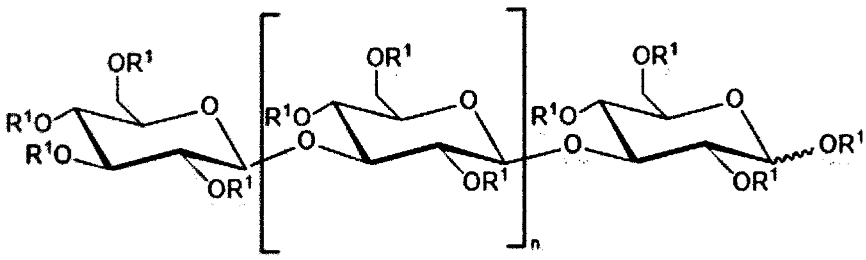

(I)

(wherein in Formula (I), $R^1$s are each independently hydrogen or an acyl group represented by $-COR^1$, $R^1$ is a hydrocarbon group, and n is a natural number; provided that one or more -COR's are included)

wherein the hot-melt adhesive has a compressive shear bond strength of 1.0 $N/mm^2$ or more as determined under Condition 1 below:

<Condition 1>

a piece of wood with a length of 30 mm, a width of 25 mm, and a thickness of 10 mm is used as an adherend;

two pieces of the adherends, with the hot-melt adhesive with a length of 25 mm, a width of 25 mm, and a thickness of 0.1 mm sandwiched in between, are superposed with grain directions aligned, hot pressed at a temperature of 190 °C and a pressure of 1 MPa for 20 minutes, and then cooled to room temperature while

maintaining a press pressure of 1 MPa to bond the two pieces to produce a specimen; and

the compressive shear bond strength ($N/mm^2$) is determined for the specimen with a compressive shear bond strength testing method for adhesives in compliance with JISK6852.

(2) The hot-melt adhesive of (1), wherein the hot-melt adhesive has a softening temperature of 90 °C or higher.

(3) The hot-melt adhesive of (1) or (2), wherein the hot-melt adhesive has a 5% weight loss temperature of 250 °C or higher.

(4) The hot-melt adhesive of any one of (1) to (3), wherein $R^1$ is a C5-C15 alkyl group.

(5) The hot-melt adhesive of any one of (1) to (4), wherein $R^1$ is a C5-C11 alkyl group.

(6) The hot-melt adhesive of any one of (1) to (5), wherein $R^1$ is a C5-C7 alkyl group.

(7) The hot-melt adhesive of any one of (1) to (6), wherein the β-1,3-glucan derivative has a degree of acyl group substitution of 1.00 to 2.90.

(8) The hot-melt adhesive of any one of (1) to (7), wherein the hot-melt adhesive has a compressive shear bond strength after re-bonding of 1.0 $N/mm^2$ or more as determined under Condition 2 below:

<Condition 2>

the specimen is heated to release the two pieces of the adherends, bonding surfaces of the released two pieces of the adherends are superposed again, hot pressed at a temperature of 190 °C and a pressure of 1 MPa for 20 minutes, and then cooled to room temperature while maintaining a press pressure of 1 MPa to re-bond the two pieces to produce a re-bonded specimen; and

the compressive shear bond strength ($N/mm^2$) after re-bonding is determined for the re-bonded specimen with the compressive shear bond strength testing method for adhesives in compliance with JISK6852.

(9) A method for producing the hot-melt adhesive of any one of (1) to (8), including
substituting hydrogen of at least one hydroxy group in at least one glucose unit of a β-1,3-glucan with $-COR^1$ ($R^1$ representing a hydrocarbon group) to prepare the β-1,3-glucan derivative.

(10) A method for bonding a first adherend and a second adherend, including applying the hot-melt adhesive of any one of (1) to (8) between the first adherend and the second adherend.

(11) The method of (10), wherein the first adherend and the second adherend are ligneous materials.

(12) A method for bonding a first adherend and a second adherend, including:

heating to release the first adherend and the second adherend bonded by the method of (10) or (11); and

re-bonding the first adherend and the second adherend with the hot-melt adhesive remaining on a bonding surface of the first adherend and/or a bonding surface of the second adherend.

(13) A hot-melt adhesive of any one of (1) to (8), for use in bonding of a ligneous material.

(14) Use of the hot-melt adhesive of any one of (1) to (8) in bonding of a ligneous material.

The present invention can provide a hot-melt adhesive that has high sustainability and excellent adhesiveness.

## DESCRIPTION OF EMBODIMENTS

[Description of Terms]

A "β-1,3-glucan" is a polysaccharide formed by polymerization of glucoses via β-1,3 bonds. The β-1,3-glucan may be biologically derived or may be a synthesized product. From the perspective of environmental burden reduction, it is preferably biologically derived and is more preferably plant-derived. Particularly, since it is easy to isolate and purify β-1,3-glucans, β-1,3-glucans separated from microalgae that synthesize β-1,3-glucans in the cells are preferred. As the microalgae, those in the genus of *Euglena* (Japanese name: *midorimushi*) are preferred, and *Euglena gracilis* is more preferred. *Euglena* are easy to culture and have fast growth cycles. In addition, they accumulate large amounts of β-1,3-glucan particles as photosynthesis products in the cells. Further, the separation of a β-1,3-glucan from a microalga can be easily performed with a conventional method. The β-1,3-glucan produced by *Euglena* is also called paramylon.

A "β-1,3-glucan derivative" is typically a compound in which the hydrogen of at least one hydroxy group in at least one glucose unit in a β-1,3-glucan has been substituted by a functional group such as an acyl group. A β-1,3-glucan derivative can be prepared according to a conventional method. A specific example of such a method will be described below.

"Bonding/adhesion" refers to the integration of homogeneous or heterogeneous matters or a state thereof. "To bond" is to cause adhesion. An "adhesive" is a substance used for bonding. "Adhesiveness" is a property that confers adhesion.

"Sticking" is a phenomenon generally observed with high-viscosity liquids and is a phenomenon in which adhesion occurs by only applying a slight pressure for a short period of time without causing a change in state. "To stick" is to cause sticking. "Sticky agent" is a substance used for sticking. "Stickiness" is a property that confers sticking.

"Hot-melt adhesives" are adhesives that bond various materials, such as plastics, metals, ligneous materials, paper, and coated surfaces, by utilizing a heating and melting-cooling and solidifying cycle using thermoplastic polymers that are solid at ambient temperature and become liquids at high temperatures. Hot-melt adhesives are free of volatile solvents and are thus very safe. Moreover, due to excellent properties such as lack of dryness-induced shrinkage, hot-melt adhesives are widely used in industries.

A "ligneous material" is a material using wood or bamboo. The wood may be from a conifer or a broadleaf tree. Moreover, the ligneous material may be a material that is reconstituted after wood or bamboo has been processed into the form of plates, pieces, or fibers. For example, it may be plywood, particle board, or fiberboard, or may be a recycled material thereof.

In the present disclosure, numerical ranges described using expressions such as "to" or "-" all include the respective upper limit value and lower limit value. For example, the description "A to B" or "A-B" using numerical values A and B means A or more and B or less. Moreover, the description "A to B", "A-B", or "A or more and B or less" independently include both "A or more being preferable" and "B or less being preferable".

For specific parameters in the present disclosure, when multiple numerical ranges are described, a suitable numerical range can be set by combining arbitrary upper limit and lower limit values within the upper limit value and the lower limit value of each numerical range. Further, the lower limit value and the upper limit value of a numerical range described in the present disclosure may be replaced by numerical values that are within the numerical range and that are shown in the Examples.

The expression "and/or" in the present disclosure includes both the relation represented by "and" and the relation represented by "or".

The term "include/comprise" in the present disclosure includes "consist mainly of", "consist essentially of", and "consist of". "Consist mainly of" includes "consist essentially of" and "consist of", and "consist essentially of" includes "consist of".

In the present disclosure, an object expressed in the singular form using "a", "an", "the", or the like, unless clearly indicated otherwise, encompasses a single and a plurality of the object.

[Embodiments] Embodiments of the present invention will be described in detail below, but the present invention is not limited to the following embodiments and can be implemented with modifications added, as appropriate, as long as the effects of the present invention are not inhibited. These embodiments may be implemented alone, or a plurality thereof may be combined. In cases in which a specific explanation made for an embodiment also applies to another embodiment, the explanation may be omitted for the other embodiment. Publicly known techniques and procedures described in the present specification are adequately understood by those skilled in the art and can be performed in accordance with a conventional method.

(Hot-melt adhesive)

In an embodiment, a hot-melt adhesive is provided, the hot-melt adhesive including a β-1,3-glucan derivative having a structure represented by Formula (I) below:

[Chem. 1]

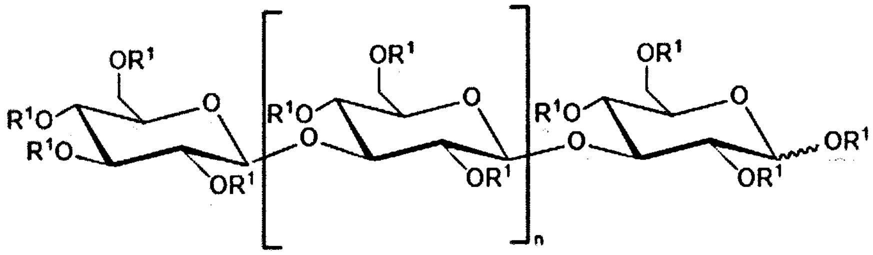 (I)

(wherein in Formula (I), $R^1$s are each independently hydrogen or an acyl group represented by $-COR^1$, $R^1$ is a hydrocarbon group, and n is a natural number; provided that one or more -COR's are included)
wherein the hot-melt adhesive has a compressive shear bond strength of 1.0 N/mm$^2$ or more as determined under Condition 1 below. In another embodiment, a method for producing this hot-melt adhesive is provided.

<Condition 1>

A piece of wood with a length of 30 mm, a width of 25 mm, and a thickness of 10 mm is used as an adherend. Two pieces of the adherend, with the hot-melt adhesive with a length of 25 mm, a width of 25 mm, and a thickness of 0.1 mm sandwiched in between, are superposed with grain directions aligned, hot pressed under a temperature of 190 °C and a pressure of 1 MPa for 20 minutes, and then cooled to room temperature while maintaining a press pressure of 1 MPa to bond the two pieces to produce a specimen.
The compressive shear bond strength (N/mm$^2$) is determined for the specimen with a compressive shear bond strength testing method for adhesives in compliance with JISK6852.
The hot-melt adhesive in the present embodiment can use a naturally derived biomass raw material obtained from *Euglena* or the like and therefore has high sustainability. Further, this hot-melt adhesive has excellent adhesiveness and is suitable for bonding various materials such as plastics, metals, ligneous materials, paper, and coated surfaces, and is particularly suitable for the purpose of bonding a ligneous material.
The hot-melt adhesive in the present embodiment may be a hot-melt adhesive for bonding a ligneous material.
The hot-melt adhesive in the present embodiment may include only a β-1,3-glucan derivative, or may further include another component (a polymer other than the β-1,3-glucan derivative, various additives such as a plasticizer, an anti-oxidant, a UV absorber, a filler, a mold release agent, a colorant, a flame retardant auxiliary, a flame retardant, etc.) as necessary.
In an embodiment, the hot-melt adhesive may have a β-1,3-glucan derivative content of 50 mass% or more, 60 mass% or more, 80 mass% or more, 90 mass% or more, 98 mass% or more, or 100 mass%.
The hot-melt adhesive in the present embodiment is solid at ambient temperature and can be processed into an adequate shape by hot pressing. For example, if the hot-melt adhesive is to be tested for compressive shear bond strength as described above, the hot-melt adhesive will be processed into the form of a film with a length of 25 mm, a width of 25 mm, and a thickness of 0.1 mm.
In an embodiment, the hot-melt adhesive does not need to have stickiness at ambient temperature. A hot-melt adhesive that does not have stickiness at ambient temperature is easier to handle and is thus more preferable than a hot-melt adhesive that has stickiness at ambient temperature.

(Compressive shear bond strength)

In the present embodiment, the compressive shear bond strength may be 1.0 N/mm$^2$ or more, 2.0 N/mm$^2$ or more, 3.0 N/mm$^2$ or more, 4.0 N/mm$^2$ or more, 5.0 N/mm$^2$ or more, or 5.4 N/mm$^2$ or more. Moreover, the compressive shear bond strength may be 1.0 N/mm$^2$ to 9.0 N/mm$^2$, 2.0 N/mm$^2$ to 9.0 N/mm$^2$, 3.0 N/mm$^2$ to 9.0 N/mm$^2$, 4.0 N/mm$^2$ to 9.0 N/mm$^2$, 5.0 N/mm$^2$ to 9.0 N/mm$^2$, 5.4 N/mm$^2$ to 9.0 N/mm$^2$, 1.0 N/mm$^2$ to 5.4 N/mm$^2$, 1.0 N/mm$^2$ to 5.0 N/mm$^2$, 1.0 N/mm$^2$ to 4.0 N/mm$^2$, or 2.0 N/mm$^2$ to 4.0 N/mm$^2$. Further, the compressive shear bond strength may be 1.3 N/mm$^2$, 2.3 N/mm$^2$, 2.5 N/mm$^2$, 2.9 N/mm$^2$, 3.6 N/mm$^2$, 5.0 N/mm$^2$, 5.5 N/mm$^2$, 6.0 N/mm$^2$, 6.2 N/mm$^2$, or 8.6 N/mm$^2$, may be ranges with these values as the upper limit value or the lower limit value, or may be ranges with these values combined as the upper limit value and the lower limit value. A hot-melt adhesive with a compressive shear bond strength within these ranges can acquire excellent adhesiveness. Further, by setting the compressive shear bond strength low for purposes requiring low adhesiveness and the compressive shear bond strength high for purposes requiring high adhesiveness, an adequate adhesiveness can be provided for the hot-melt adhesive according to the purpose.
The compressive shear bond strength can be adjusted by, e.g., adjusting the number of carbon atoms of the acyl

groups or the degree of acyl group substitution of the β-1,3-glucan derivative as described below. For example, when the hydrocarbon group included as $R^1$ in the acyl group represented by $-COR^1$ is a C5 to C7 alkyl group, the compressive shear bond strength can be made 1.0 $N/mm^2$ or more by adjusting the degree of acyl group substitution to 1.50 to 2.90.

In general, a β-1,3-glucan derivative with a high degree of acyl group substitution is highly thermoplastic. Meanwhile, a β-1,3-glucan derivative with a low degree of substitution by acyl groups has high hardness at ambient temperature. By adjusting the balance between thermoplasticity and hardness at ambient temperature, the compressive shear bond strength can be made higher (or lower). For example, when paramylon octanoate is included (i.e., when the hydrocarbon group included as $R^1$ in the acyl group represented by $-COR^1$ is a C7 alkyl group), the compressive shear bond strength is higher with a degree of acyl group substitution in the range of 1.70 to 2.80. As another example, when paramylon hexanoate (i.e., when the hydrocarbon group included as $R^1$ in the acyl group represented by $-COR^1$ is a C5 alkyl group), the compressive shear bond strength is higher with a degree of acyl group substitution in the range of 1.90 to 2.90.

With respect to the specimen in the compressive shear bond strength test for the adhesive, typically a cedar board is used for the piece of wood that is used as an adherend, but there are no limitations on this point. Adherends can be prepared by cutting out a rod-shaped board that is long in the grain direction and has a width of 25 mm and a thickness of about 12 mm, the width and the thickness being orthogonal to the grain direction, applying a planer in the thickness direction to adjust the thickness to 10 mm, and then cutting out continuously pieces that are 30 mm in length along the grain direction. For the specimen, adherends are superposed with their grain directions aligned. Hot pressing can be performed using commercially available hydraulic press equipment (e.g., multi-axis material test system V-1815, manufactured by Saginomiya Seisakusho, Inc.) according to the descriptions in the manual attached to the equipment. After hot pressing, the specimen is typically left standing at a temperature of 20 °C in an atmosphere with a relative humidity of 60% for one week or longer, and then subjected to a compressive shear bond strength testing method for adhesives.

Below is a summary of a compressive shear bond strength testing method for adhesives in compliance with JISK6852. One of the two pieces of adherends included in a specimen is fixed to a compression tester with a jig. A compression load is applied to the other piece of adherend in a direction parallel to the bonding plane at 20 °C at a test speed of 2 mm/min. From the maximum load (N) when the bonding plane is disrupted and the bond area ($mm^2$), a compressive shear bond strength ($N/mm^2$) is determined from equation (1).

$$\text{Compressive shear bond strength } (N/mm^2) = \text{maximum load } (N)/\text{bond area } (mm^2) \ldots (1)$$

The bond area ($mm^2$) is the area of a bonding surface with the hot-melt adhesive (length 25 mm × width 25 mm = 625 $mm^2$).

(β-1,3-glucan derivative)

In the β-1,3-glucan derivative represented by Formula (I) described above, the hydrocarbon group included as $R^1$ in the acyl group represented by $-COR^1$ is an aliphatic hydrocarbon group or an aromatic hydrocarbon group. The aliphatic hydrocarbon group may be linear or branched, and may have a cyclic structure. The aliphatic hydrocarbon group may be a saturated aliphatic hydrocarbon group (alkyl group) or an unsaturated aliphatic hydrocarbon group (alkenyl group or alkynyl group). As the aliphatic hydrocarbon group, in terms of the ease of synthesis, the high degree of freedom of $R^1$, and the like, an alkyl group is preferred. The alkyl group may be a C5-C15 alkyl group, a C5-C13 alkyl group, a C5-C11 alkyl group, a C5-C9 alkyl group, a C5-C7 alkyl group, a C5 alkyl group, a C6 alkyl group, a C7 alkyl group, a C8 alkyl group, a C9 alkyl group, a C10 alkyl group, a C11 alkyl group, a C12 alkyl group, a C13 alkyl group, a C14 alkyl group, or a C15 alkyl group. Further, these alkyl groups may be linear or branched, and may have a cyclic structure, but are preferably linear. When the hydrocarbon group is an alkyl group with a large carbon number, compared with cases in which the hydrocarbon group is an alkyl group with a small carbon number, there is a tendency for the distance between acyl groups to increase and the thermoplasticity of the β-1,3-glucan derivative to increase. However, when the hydrocarbon group is an alkyl group with an excessively high carbon number, the interaction between acyl groups can increase, so the thermoplasticity of the β-1,3-glucan derivative may decrease. It is thought that by including an alkyl group as described above in the acyl group, the intermolecular interaction in the β-1,3-glucan derivative can be appropriately adjusted, making it easier to obtain a hot-melt adhesive that has a compressive shear bond strength in the above-mentioned ranges.

$-COR^1$ may be an acetyl group, a propionyl group, an isopropionyl group, a butyryl group, an isobutyryl group, a pentanoyl group, a hexanoyl group, a heptanoyl group, an octanoyl group, a nonanoyl group, a decanoyl group, a lauroyl group, a myristoyl group, a palmitoyl group, a stearoyl group, an oleoyl group, a linoleoyl group, a linolenoyl group, or the like.

In Formula (I), n is not particularly limited as long as the scope of the present invention is not compromised, but is preferably 60 to 3000, more preferably 1000 to 2500, and even more preferably 1500 to 2000. When n is within the above ranges, a hot-melt adhesive having an adequate adhesiveness can be easily obtained.

The weight average molecular weight (Mw) of the β-1,3-glucan derivative is more preferably 300000 to 600000 and even more preferably 400000 to 500000. The number average molecular weight (Mn) of the β-1,3-glucan derivative is more preferably 200000 to 500000 and even more preferably 300000 to 400000. When the molecular weight of the β-1,3-glucan derivative is within the above ranges, a hot-melt adhesive having an adequate adhesiveness can be easily obtained.

The dispersity (Mw/Mn) of the β-1,3-glucan derivative is preferably 1.0 or more and 1.6 or less, and is more preferably 1.0 to 1.2. When the dispersity (Mw/Mn) is within the above ranges, the monodispersity of the β-1,3-glucan used as a raw material is better maintained, and a β-1,3-glucan derivative that is less prone to defects caused by melting point differences can be made. Mw is weight average molecular weight, and Mn is number average molecular weight. Mw and Mn can be calculated in polystyrene equivalents using gel permeation chromatography (GPC).

The degree of acyl group substitution of the β-1,3-glucan derivative is not particularly limited as long as the effects of the present invention are not inhibited, but is preferably 1.00 to 2.90, more preferably 1.50 to 2.90, and even more preferably 1.70 to 2.90.

Further, when the hydrocarbon group is a C5 or C6 alkyl group (i.e., when the number of carbon atoms in the acyl group is 6 or 7), the degree of acyl group substitution of the β-1,3-glucan derivative is preferably 1.50 to 2.90, more preferably 1.70 to 2.90, and even more preferably 1.80 to 2.80. Moreover, for purposes requiring high adhesiveness, the degree of acyl group substitution is preferably 1.90 to 2.90, more preferably 2.0 to 2.90, and even more preferably 2.10 to 2.80. When the hydrocarbon group is a C7 or C8 alkyl group (i.e., when the number of carbon atoms in the acyl group is 8 or 9), the degree of acyl group substitution is preferably 1.50 to 2.90, more preferably 1.60 to 2.90, and even more preferably 1,80 to 2.90. Moreover, for purposes requiring high adhesiveness, the degree of acyl group substitution is preferably 1.70 to 2.80, more preferably 1.70 to 2.40, and even more preferably 1.70 to 2.00. When the hydrocarbon group is a C9-C15 alkyl group (i.e., when the number of carbon atoms in the acyl group is 10 to 16), the degree of acyl group substitution is preferably 1.50 to 2.60, more preferably 1.70 to 2.60, and even more preferably 1.90 to 2.50.

As mentioned above, a β-1,3-glucan derivative with a high degree of acyl group substitution is generally highly thermoplastic. Meanwhile, a β-1,3-glucan derivative with a low degree of acyl group substitution has high hardness at ambient temperature. For a hot-melt adhesive having excellent adhesiveness, it is important that the adhesive has both adequate thermoplasticity and adequate hardness at ambient temperature, and the obtainment of such a hot-melt adhesive tends to be easier when the degree of acyl group substitution is within the above ranges.

In addition, the degree of acyl group substitution of a β-1,3-glucan derivative is the ratio of acyl groups bound to each glucose unit in the raw material β-1,3-glucan. For example, a degree of acyl group substitution of 1.0 means that one substituent has been introduced to one glucose unit. Theoretically, the degree of acyl group substitution has an upper limit value of 3.0. The degree of acyl group substitution can be evaluated by a conventional method. Examples of such methods include nuclear magnetic resonance spectroscopy (NMR method) and elemental analysis. When nuclear magnetic resonance spectroscopy (NMR method) is used, typically, the degree of acyl group substitution is evaluated, by $^1$H-NMR, on the basis of the integral values of the hydrogen (hydrogen in methylene and methine groups) directly bound to carbon in glucose units and the hydrogen in acyl groups.

The degree of acyl group substitution by acyl groups of a β-1,3-glucan derivative is adjusted by changing the preparation ratio of an acylation reagent and glucose units included in β-1,3-glucan in the below-described method for producing a β-1,3-glucan derivative.

The preparation ratio of the acylation reagent and the glucose units included in β-1,3-glucan (acylation reagent/glucose units included in β-1,3-glucan (mol/mol)) is not particularly limited as long as the effects of the present invention are not inhibited, but is preferably 6.0 to 1.0, more preferably 5.0 to 1.5, and even more preferably 4.0 to 2.0. Moreover, the preparation ratio of the acylation reagent and the glucose units included in β-1,3-glucan may be 2.5, 3.0, or 3.5, may be ranges with these values as the upper limit value or the lower limit value, or may be ranges with these values combined as the upper limit value and the lower limit value.

By using an acylation reagent and glucose units included in β-1,3-glucan at a preparation ratio of these ranges, appropriate adjustment of the degree of acyl group substitution by acyl groups of a β-1,3-glucan derivative tends to be easy.

(Method for producing β-1,3-glucan derivative)

As a method for producing a β-1,3-glucan derivative, a synthesis method of acylating, with a fatty acid, some or all of the hydroxy groups in the glucoses constituting a β-1,3-glucan may be given.

Specifically, as shown in equation (2) below, a method of sequentially reacting a β-1,3-glucan in a solution in which the β-1,3-glucan is dissolved in a solvent, in the presence of a base, with a fatty acid chloride, a fatty acid anhydride, or a vinyl compound of a fatty acid as an acylation reagent may be given.

[Chem. 2]

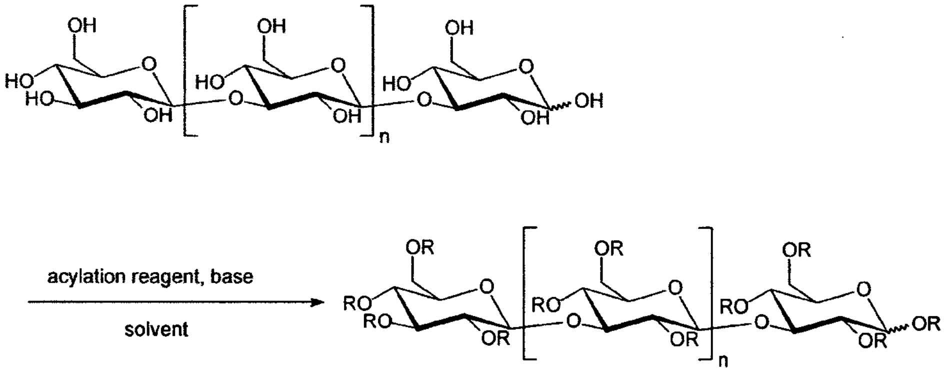


(2)

Here, Rs are each independently hydrogen or an acyl group, at least some Rs are acyl groups, and n is a natural number.

Examples of fatty acid chlorides include acetyl chloride, butyryl chloride, lauroyl chloride, myristoyl chloride, palmitoyl chloride, stearoyl chloride, hexadecenoyl chloride, oleoyl chloride, linoleoyl chloride, linolenoyl chloride, and the like.

Examples of fatty acid anhydrides include acetic anhydride, propionic anhydride, butyric anhydride, and the like.

Examples of vinyl compounds of fatty acids include vinyl acetate, vinyl propionate, vinyl laurate, vinyl myristate, vinyl palmitate, vinyl stearate, vinyl hexadecenoate, vinyl oleate, vinyl linoleate, vinyl linolenate, and the like.

As the solvent, an N,N-dimethyl acetamide-lithium chloride mixed solvent, dimethyl sulfoxide, a 1,3-dimethyl-2-imidazolidinone-lithium chloride-based solvent, and the like may be given.

As the base, one that is publicly known, such as pyridine, 4-dimethylaminopyridine, or triethylamine can be used.

The reaction temperature, reaction time, and other conditions in this synthesis method are to be set, as appropriate, by those skilled in the art in consideration of the type of acylation reagent, the degree of acyl group substitution, and the like.

The resulting β-1,3-glucan derivative can be processed into an adequate shape by, e.g., hot pressing. For example, if the β-1,3-glucan derivative is to be used as a hot-melt adhesive and is to be tested for compressive shear bond strength as described above, it can be processed into the form of a film with a length of 25 mm, a width of 25 mm, and a thickness of 0.1 mm.

In an embodiment, the β-1,3-glucan derivative can be made into a film with a thickness of 0.01 mm to 1 mm.

(Softening temperature)

In the present embodiment, the softening temperature of the hot-melt adhesive is not particularly limited as long as the effects of the present invention are not inhibited, but is preferably 90 °C or higher, more preferably 100 °C to 200 °C, and even more preferably 110 to 190 °C. Further, when the softening temperature is 90 °C or higher, it may be 91.8 °C, 115.5 °C, 149.8 °C, 161.4 °C, 165.0 °C, or 191.7 °C, may be ranges with these values as the upper limit value or the lower limit value, or may be ranges with these values combined as the upper limit value and the lower limit value. By having a softening temperature in these ranges, when the hot-melt adhesive is used for bonding, the heating and melting-cooling and solidifying cycle tends to become easily implementable.

A softening temperature is the temperature at which fluidity increases rapidly and deformation begins in a temperature-increasing process, and can be measured with thermomechanical analysis dynamic viscoelasticity measurement equipment (e.g., TMA/SS6000, Hitachi High-Tech Science).

(5% weight loss temperature)

In the present embodiment, the 5% weight loss temperature of the hot-melt adhesive is not particularly limited as long as the scope of the present invention is not compromised, but is preferably 250 °C or higher and more preferably 270 °C or higher. Further, when the 5% weight loss temperature is 250 °C or higher, it may be 274.8 °C, 319.8 °C, 322.8 °C, 333.9 °C, 342.6 °C, or 347.3 °C, may be ranges with these values as the upper limit value or the lower limit value, or may be ranges with these values combined as the upper limit value and the lower limit value. By having a 5% weight loss temperature in these ranges, the hot-melt adhesive, when exposed to high temperatures, has less weight loss and tends to be capable of maintaining adhesiveness.

A "5% weight loss temperature" is the temperature at which the heating of a sample induces thermal degradation and reduces 5% of the weight as compared with the weight of the sample at approximately room temperature, and can be measured by simultaneous thermogravimetry/differential thermal analysis equipment (e.g., Thermo plus EVO2 TG 8120, Rigaku).

(Compressive shear bond strength after re-bonding)

In the present embodiment, the hot-melt adhesive may have a compressive shear bond strength after re-bonding of 1.0 $N/mm^2$ or more as determined under Condition 2 below.

<Condition 2>

A specimen (a) obtained by the method described in <Condition 1> above is prepared. That is, a piece of wood with a length of 30 mm, a width of 25 mm, and a thickness of 10 mm is used as an adherend. Two pieces of the adherends are superposed with the hot-melt adhesive with a length of 25 mm, a width of 25 mm, and a thickness of 0.1 mm sandwiched in between and hot pressed at a temperature of 190 °C and a pressure of 1 MPa for 20 minutes to bond the two pieces to produce a specimen (a).
This specimen (a) is heated to release the two pieces of the adherends. The bonding surfaces of the released two pieces of the adherends are superposed again and hot pressed at a temperature of 190 °C and a pressure of 1 MPa for 20 minutes to re-bond the two pieces to produce a re-bonded specimen (b).
The compressive shear bond strength ($N/mm^2$) after re-bonding is determined for the re-bonded specimen (b) with the compressive shear bond strength testing method for adhesives in compliance with JISK6852 as described above.
The operation of heating the specimen to release two pieces of adherends can be performed with a conventional method. For example, it can be performed using a small hot press (e.g., product name: AH-2003, manufactured by AS ONE Corporation) by heating at 160 °C, 180 °C, or 190 °C for 30 minutes and then applying force by hand.
The compressive shear bond strength after re-bonding may be 1.0 $N/mm^2$ or more, 2.0 $N/mm^2$ or more, 3.0 $N/mm^2$ or more, 4.0 $N/mm^2$ or more, 5.0 $N/mm^2$ or more, or 5.4 $N/mm^2$ or more. Moreover, the compressive shear bond strength after re-bonding may be 1.0 $N/mm^2$ to 9.0 $N/mm^2$, 2.0 $N/mm^2$ to 9.0 $N/mm^2$, 3.0 $N/mm^2$ to 9.0 $N/mm^2$, 4.0 $N/mm^2$ to 9.0 $N/mm^2$, 5.0 $N/mm^2$ to 9.0 $N/mm^2$, 5.4 $N/mm^2$ to 9.0 $N/mm^2$, 1.0 $N/mm^2$ to 5.4 $N/mm^2$, 1.0 $N/mm^2$ to 5.0 $N/mm^2$, 1.0 $N/mm^2$ to 4.0 $N/mm^2$, or 2.0 $N/mm^2$ to 4.0 $N/mm^2$. Further, the compressive shear bond strength after re-bonding may be 3.1 $N/mm^2$, 5.2 $N/mm^2$, or 5.4 $N/mm^2$, may be ranges with these values as the upper limit value or the lower limit value, or may be ranges with these values combined as the upper limit value and the lower limit value.
A hot-melt adhesive with a compressive shear bond strength after re-bonding 1.0 $N/mm^2$ or more would maintain excellent adhesiveness even in the case of re-bonding. Therefore, even for once-bonded materials that were released, the materials bonded by this hot-melt adhesive can effectively use the hot-melt adhesive used in the first bonding as-is for a second bonding without newly applying the hot-melt adhesive or removing the hot-melt adhesive used in the first bonding. Further, this can reduce the hot-melt adhesive to be newly added. This feature of the hot-melt adhesive is particularly useful for cases in which hot-melt adhesives are used to process wood into houses and furniture, and also facilitates the re-use of wood that were used in houses and furniture after their duration of use has ended.
In addition, wood, when processed into houses, furniture, and the like, is used for long periods of time, and is therefore an excellent material from the perspectives of Carbon dioxide Capture, Utilization, and Storage (CCUS). However, since most are incinerated after their duration of use has ended, the stored carbon dioxide is again released into the atmosphere. One of the promising measures to avoid this is the re-use of wood. The re-use here refers to the re-use of plywood, particle board, fiberboard, and the like used in products such as furniture in other products. To re-use wood, laminated plywood and the like often need to be taken apart. The hot-melt adhesive in the present embodiment, as described above, has excellent adhesiveness and allows wood to be released by heating, so the re-use of wood is easy and sustainability is high.

(Method for producing hot-melt adhesive)

In one embodiment, a method for producing the above hot-melt adhesive is provided, the method including substituting hydrogen of at least one hydroxy group in at least one glucose unit of a β-1,3-glucan with $-COR^1$ ($R^1$ representing a hydrocarbon group) to prepare the β-1,3-glucan derivative. Since a naturally derived biomass raw material obtained from *Euglena* or the like can be used, this production method has high sustainability. Further, a hot-melt adhesive produced by this production method has excellent adhesiveness and is particularly suitable for the purpose of bonding wood. The method for preparing a β-1,3-glucan derivative is as described above.

(Bonding method)

In one embodiment, a method for bonding a first adherend and a second adherend is provided, the method including sandwiching the hot-melt adhesive described above between the first adherend and the second adherend. The first adherend and the second adherend are not particularly limited as long as the effects of the present invention are not inhibited, but when the first adherend and the second adherend are wood, a good bonding between the first adherend and the second adherend can be achieved.
In addition, many conventional adhesives for wood are mainly synthetic adhesives that greatly depend on fossil resources, such as those formaldehyde-based. However, from the regulations on volatile organic compound (VOC) emissions, the perspective of considerations for the human body and the environment, and the perspective of sustainability, the use of such synthetic adhesives is not preferred. In contrast, the method in this embodiment uses a hot-melt adhesive that can use a naturally derived biomass raw material obtained from *Euglena* or the like, and therefore imposes a low burden on the human body and the environment and has high sustainability.
The bonding method of the present embodiment is not particularly limited as long as the effects of the present invention are not inhibited, but when the first adherend and the second adherend are wood, the first adherend and the second adherend can be bonded by, e.g., sandwiching the hot-melt adhesive between the first adherend and the second adherend and then hot pressing under the conditions of a temperature of 90 to 200 °C and a pressure of 0.5 to 10 MPa for 5 to 60 minutes, followed by cooling to room temperature.

(Re-bonding method)

In one embodiment, a method for bonding a first adherend and a second adherend is provided, the method including heating to release the first adherend and the second adherend bonded by the method for bonding the first adherend and the second adherend described above, and re-bonding the first adherend and the second adherend with the hot-melt adhesive remaining on a bonding surface of the first adherend and/or a bonding surface of the second adherend. According to this method, when re-using an adherend, the previously applied hot-melt adhesive can be re-used, so resources can be effectively utilized. Further, the time and effort when re-using the adherend can also be reduced.
The heating to release method is not particularly limited as long as the effects of the present invention are not inhibited, but when the first adherend and the second adherend are wood, they can be released by, e.g., heating the bonded first adherend and second adherend at 90 to 200 °C for 5 to 60 minutes.

In one embodiment, use of the hot-melt adhesive described above in the bonding of a material is provided. The material may be an arbitrary material as long as the effects of the present invention can be achieved, but is preferably a ligneous material. The bonding of the material can be implemented in the same manner as the bonding method described above.

## EXAMPLES

Herebelow, the present invention will be explained in further detail with examples, but these examples do not limit the present invention. In addition, the commercially available reagents, machines, and the like mentioned in the examples, unless indicated otherwise, were used in accordance with the manufacturer's instructions or conventional methods.

[Synthesis of hot-melt adhesive] Preparations of paramylon hexanoate (acyl group carbon number: 6), paramylon heptanoate (acyl group carbon number: 7), paramylon octanoate (acyl group carbon number: 8), paramylon decanoate (acyl group carbon number: 10), paramylon laurate (acyl group carbon number: 12), paramylon myristate (acyl group carbon number: 14), and paramylon palmitate (acyl group carbon number: 16), which are β-1,3-glucan derivatives, made according to a conventional method were used as hot-melt adhesives. As the conventional method, a method represented by the following synthesis scheme may be given.

[Chem. 2]

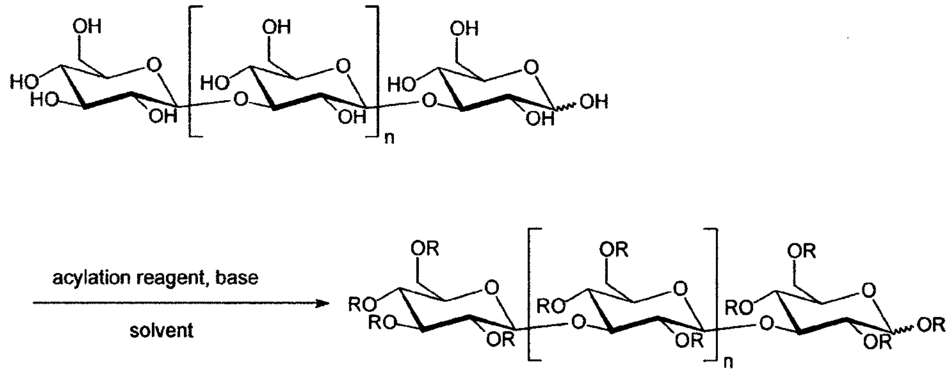


(2)

Here, Rs are each independently hydrogen or an acyl group, at least some Rs are acyl groups, and n is a natural number.

The synthesis method will be described in more detail below using paramylon hexanoate, which as a degree of acyl group substitution of 2.12, as an example. Paramylon at 2.502 g (15.431 mmol) was dispersed in 200 mL of pyridine, and then to the dispersion, 6.226 g (46.256 mmol) of hexanoyl chloride was dropped, followed by stirring at 65 °C in a nitrogen atmosphere. Here, the preparation ratio of the acylation reagent and the glucose unit included in paramylon (acylation reagent/glucose units included in the β-1,3-glucan (mol/mol)) is 3.0. After three hours, the homogeneous solution was placed in 400 mL of water to obtain a light yellow sticky solid. This was removed by decantation, dispersed in 200 mL of methanol, and washed by stirring (10 minutes, twice). The product was then dispersed in 50 mL of chloroform and stirred at room temperature until homogenized. The homogenized product was then placed in 300 mL of methanol to obtain a white gel. This operation was repeated twice. By air drying (overnight) and subsequent vacuum heating and drying (100 °C, three hours), the target substance (4.047 g, 10,972 mmol, degree of acyl group substitution: 2.12, yield: 71.1%) was obtained.
Each β-1,3-glucan derivative was obtained with the same synthesis method by setting the acyl group carbon number of the acylation reagent and the preparation ratio of the acylation reagent and the glucose units included in paramylon as per the descriptions in Table 1. For example, by using hexanoyl chloride as the acylation reagent and setting the preparation ratio of the acylation reagent and the glucose units included in paramylon to 3.5:1.0, paramylon hexanoate having a degree of acyl group substitution of 2.76 was obtained. Moreover, by using octanoyl chloride as the acylation reagent and setting the preparation ratio of the acylation reagent and the glucose units included in paramylon to 3.5 to 1.0, paramylon octanoate having a degree of acyl group substitution of 2.87 was obtained.
The resulting β-1,3-glucan derivatives were each processed by hot pressing into the form of a sheet with a length of 25 mm, a width of 25 mm, and a thickness of 0.1 mm.

The degree of acyl group substitution was evaluated, by $^1$H-NMR, on the basis of the integral values of the hydrogen (hydrogen in methylene and methine groups) directly bound to carbon in the glucose units and the hydrogen in the acyl groups.

[Evaluation of softening temperature] The softening temperature was evaluated using thermomechanical analyzing equipment (e.g., TMA/SS6000, Hitachi High-Tech Science).

[Evaluation of 5% weight loss temperature] The 5% weight loss temperature was evaluated using simultaneous thermogravimetry/differential thermal analysis equipment (Thermo plus EVO2 TG 8120, Rigaku).

[Evaluation of compressive shear bond strength and compressive shear bond strength after re-bonding] (Specimen preparation)

A rod-shaped plate that is long in the grain direction and has a width of 25 mm and a thickness of about 12 mm, the width and the thickness being orthogonal to the grain direction was cut out from a cedar board and was subjected to planning in the thickness direction to adjust the thickness to 10 mm. This rod-shaped plate was cut continuously into pieces that are 30 mm in length along the grain direction to prepare pieces of wood. Two pieces of adherends are aligned in their grain directions, superposed with the above-mentioned hot-melt adhesive with a length of 25 mm, a width of 25 mm, and a thickness of 0.1 mm sandwiched in between, hot pressed at a temperature of 190 °C and a pressure of 1 MPa for 20 minutes, and then cooled to room temperature while maintaining a press pressure of 1 MPa to bond the two pieces to produce a specimen. Hot pressing was performed using a multi-axis material test system V-1815 (manufactured by Saginomiya Seisakusho, Inc.) according to the descriptions in the manual attached to the equipment. The specimen was

left standing at a temperature of 20 °C in an atmosphere with a relative humidity of 60% for one week or longer and was then subjected to a compressive shear bond strength testing method for adhesives.

(Re-bonded specimen preparation)

A specimen prepared by the above-mentioned method was heated to release two pieces of adherends. The bonding surfaces of the released two pieces of the adherends were superposed again with grain directions aligned and were again subjected to hot pressing and cooling under the above-mentioned conditions to re-bond the two pieces of the adherends to produce a re-bonded specimen. In addition, the operation of heating the specimen to release the two pieces of adherends was performed using a small hot press (e.g., product name: AH-2003, manufactured by AS ONE Corporation) by heating at 160 °C, 180 °C, or 190 °C for 30 minutes and then applying force by hand. The re-bonded specimen was left standing at a temperature of 20 °C in an atmosphere with a relative humidity of 60% for one week or longer and was then subjected to a compressive shear bond strength testing method for adhesives.

(Evaluation of compressive shear bond strength)

The compressive shear bond strength was determined for the specimen and the re-bonded specimen with a compressive shear bond strength testing method for adhesives in compliance with JISK6852. That is, one of the two pieces of adherends included in the specimen or the re-bonded specimen was fixed to a compression tester (precision universal testing machine AUTOGRAPH AG-plus, manufactured by Shimadzu Corporation) with a jig (wood shear test jig, manufactured by Shimadzu Corporation). A compression load was applied to the other piece of adherend in a direction parallel to the bonding plane at 20 °C at a test speed of 2 mm/min. From the maximum load (N) when the bonding plane is disrupted and the bond area ($mm^2$), a compressive shear bond strength ($N/mm^2$) was determined from equation (1).

$$\text{Compressive shear bond strength } (N/mm^2) = \text{maximum load } (N)/\text{bond area } (mm^2) \ldots (1)$$

The compressive shear bond strength was independently determined with two significant figures for two specimens or re-bonded specimens, and evaluation was performed on the basis of the mean value thereof.

The above-mentioned results are shown in Table 1.

Table 1

| | COMPONENT | ACYL GROUP CARBON NUMBER | PREPARATION RATIO (mol/mol) | DEGREE OF ACYL GROUP SUBSTITUTION | SOFTENING TEMPERATURE (°C) | 5% WEIGHT LOSS TEMPERATURE (°C) | COMPRESSIVE SHEAR BOND STRENGTH (N/mm$^2$) | COMPRESSIVE SHEAR BOND STRENGTH AFTER RE-BONDING (N/mm$^2$) |
|---|---|---|---|---|---|---|---|---|
| EX 1 | PARAMYLON HEXANOATE | C6 | 2.5 | 1.84 | 161.4 | 274.8 | 5.0 | X |
| EX 2 | PARAMYLON HEXANOATE | C6 | 3.0 | 2.12 | 165.0 | 322.8 | 8.6 | X |
| EX 3 | PARAMYLON HEXANOATE | C6 | 3.5 | 2.76 | 115.5 | 342.6 | 6.0 | X |
| EX 4 | PARAMYLON HEPTANOATE | C7 | 3.0 | 2.28 | - | - | 5.5 | - |
| EX 5 | PARAMYLON OCTANOATE | C8 | 2.5 | 1.75 | 191.7 | 319.8 | 6.2 | 5.4 |
| EX 6 | PARAMYLON OCTANOATE | C8 | 3.0 | 1.91 | 149.8 | 333.9 | 6.2 | 3.1 |
| EX 7 | PARAMYLON OCTANOATE | C8 | 3.5 | 2.87 | 91.8 | 347.3 | 2.3 | 5.2 |
| EX 7 | PARAMYLON DECANOATE | C10 | 3.0 | 2.34 | - | - | 3.6 | - |
| EX 8 | PARAMYLON LAURATE | C12 | 3.0 | 1.96 | - | - | 2.5 | - |
| EX 9 | PARAMYLON MYRISTATE | C14 | 3.0 | 2.30 | 116.3 | - | 2.9 | - |
| EX 10 | PARAMYLON PALMITATE | C16 | 3.0 | 2.47 | - | - | 1.3 | - |
| COMP EX 1 | PARAMYLON MYRISTATE | C14 | 7.0 | 2.70 | 88.6 | - | 0.1 | |

In Table 1, the preparation ratio (mol/mol) is the preparation ratio of the acylation reagent and the glucose units included in the β-1,3-glucan (acylation reagent/glucose units included in β-1,3-glucan (mol/mol)). "-" means that there are no data. "X" means that it was not possible to release the specimen with the above-mentioned operation, and a re-bonded specimen could not be prepared.

As can be seen from Table 1, the hot-melt adhesives of Examples 1 to 10, compared with the hot-melt adhesive of Comparative Example 1, were shown to have good compressive shear bond strength and excellent adhesiveness. In particular, from the high compressive shear bond strength shown by the hot-melt adhesives of Examples 1 to 6, they are thought to be useful for purposes requiring high adhesiveness, and from the relatively low compressive shear bond strength of the hot-melt adhesives of Examples 7 to 10, they are thought to be useful for purposes requiring low adhesiveness. Further, the hot-melt adhesives of Examples 5 to 7 were shown to also have good compressive shear bond strength after re-bonding. Moreover, the hot-melt adhesives of Examples 1 to 3 and 5 to 7 were shown to have good softening temperatures and 5% weight loss temperatures.

The hot-melt adhesives of Examples 1 to 10 all lacked stickiness at ambient temperature and were easy to handle. Meanwhile, the hot-melt adhesive of Comparative Example 1 exhibited stickiness at ambient temperature.

The disclosures of the patents, patent applications, and publications cited in the present disclosure are incorporated herein by reference thereof in their entirety.

## INDUSTRIAL APPLICABILITY

The hot-melt adhesive of the present invention can be suitably used for the purpose of bonding various materials used in the final products or intermediate products of industrial products. Therefore, the present invention has industrial applicability.

## Claims

1. A hot-melt adhesive, comprising a β-1,3-glucan derivative having a structure represented by Formula (I) below:

[Chem. 1]

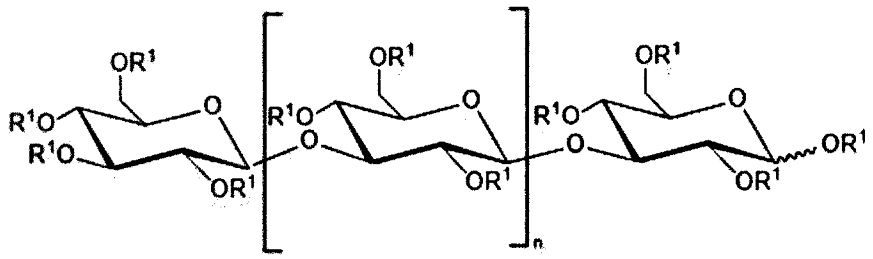

(I)

(wherein in Formula (I), $R^1$s are each independently hydrogen or an acyl group represented by $-COR^1$, $R^1$ is a hydrocarbon group, and n is a natural number; provided that one or more -COR's are included)
wherein the hot-melt adhesive has a compressive shear bond strength of 1.0 $N/mm^2$ or more as determined under Condition 1 below:

<Condition 1>
a piece of wood with a length of 30 mm, a width of 25 mm, and a thickness of 10 mm is used as an adherend; two pieces of the adherends, with the hot-melt adhesive with a length of 25 mm, a width of 25 mm, and a thickness of 0.1 mm sandwiched in between, are superposed with grain directions aligned, hot pressed at a temperature of 190 °C and a pressure of 1 MPa for 20 minutes, and then cooled to room temperature while maintaining a press pressure of 1 MPa to bond the two pieces to produce a specimen; and
the compressive shear bond strength ($N/mm^2$) is determined for the specimen with a compressive shear bond strength testing method for adhesives in compliance with JISK6852.

2. The hot-melt adhesive of claim 1, wherein the hot-melt adhesive has a softening temperature of 90 °C or higher.

3. The hot-melt adhesive of claim 1 or 2, wherein the hot-melt adhesive has a 5% weight loss temperature of 250 °C or

higher.

**4.** The hot-melt adhesive of claim 1 or 2, wherein $R^1$ is a C5-C15 alkyl group.

**5.** The hot-melt adhesive of claim 1 or 2, wherein $R^1$ is a C5-C11 alkyl group.

**6.** The hot-melt adhesive of claim 1 or 2, wherein $R^1$ is a C5-C7 alkyl group.

**7.** The hot-melt adhesive of claim 1 or 2, wherein the β-1,3-glucan derivative has a degree of acyl group substitution of 1.00 to 2.90.

**8.** The hot-melt adhesive of claim 1 or 2, wherein the hot-melt adhesive has a compressive shear bond strength after re-bonding of 1.0 $N/mm^2$ or more as determined under Condition 2 below:

<Condition 2>
the specimen is heated to release the two pieces of the adherends, bonding surfaces of the released two pieces of the adherends are superposed again, hot pressed at a temperature of 190 °C and a pressure of 1 MPa for 20 minutes, and then cooled to room temperature while maintaining a press pressure of 1 MPa to re-bond the two pieces to produce a re-bonded specimen; and
the compressive shear bond strength ($N/mm^2$) after re-bonding is determined for the re-bonded specimen with the compressive shear bond strength testing method for adhesives in compliance with JISK6852.

**9.** A method for producing the hot-melt adhesive of claim 1 or 2, comprising:
substituting hydrogen of at least one hydroxy group in at least one glucose unit of a β-1,3-glucan with $-COR^1$ ($R^1$ representing a hydrocarbon group) to prepare the β-1,3-glucan derivative.

**10.** A method for bonding a first adherend and a second adherend, comprising applying the hot-melt adhesive of claim 1 or 2 between the first adherend and the second adherend.

**11.** The method of claim 10, wherein the first adherend and the second adherend are ligneous materials.

**12.** A method for bonding a first adherend and a second adherend, comprising:

heating to release the first adherend and the second adherend bonded by the method of claim 10; and
re-bonding the first adherend and the second adherend with the hot-melt adhesive remaining on a bonding surface of the first adherend and/or a bonding surface of the second adherend.

**INTERNATIONAL SEARCH REPORT**

International application No. **PCT/JP2024/017581**

**A. CLASSIFICATION OF SUBJECT MATTER**

***C09J 105/00***(2006.01)i; ***C08B 37/00***(2006.01)i
FI: C09J105/00; C08B37/00 C

According to International Patent Classification (IPC) or to both national classification and IPC

**B. FIELDS SEARCHED**

Minimum documentation searched (classification system followed by classification symbols)

C09J1/00-5/10; 7/00-7/50; 9/00-201/10; C08B1/00-37/18; B32B1/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-154723 A (NATIONAL INSTITUTE OF ADVANCED INDUSTRIAL SCIENCE AND TECHNOLOGY) 04 October 2018 (2018-10-04) claims 1-2, paragraphs [0001], [0006]-[0007], [0009], [0011]-[0037], [0050], [0053]-[0079] | 1-12 |
| A | JP 2022-184436 A (NITTO DENKO CORPORATION) 13 December 2022 (2022-12-13) entire text, all drawings | 1-12 |
| A | WO 2021/225172 A1 (NEC CORPORATION) 11 November 2021 (2021-11-11) entire text, all drawings | 1-12 |
| A | US 2015/0045480 A1 (DAESANG CORPORATION) 12 February 2015 (2015-02-12) entire text, all drawings | 1-12 |
| A | JP 2020-521651 A (MATERIALIZE.X LIMITED) 27 July 2020 (2020-07-27) entire text, all drawings | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/017581**

**C. DOCUMENTS CONSIDERED TO BE RELEVANT**

| Category* | Citation of document, with indication, where appropriate, of the relevant passages | Relevant to claim No. |
|---|---|---|
| A | JP 2019-536873 A (E.I. DU PONT DE NEMOURS AND COMPANY) 19 December 2019 (2019-12-19) entire text, all drawings | 1-12 |

Form PCT/ISA/210 (second sheet) (July 2022)

**INTERNATIONAL SEARCH REPORT**
**Information on patent family members**

International application No.
**PCT/JP2024/017581**

| Patent document cited in search report | Publication date (day/month/year) | Patent family member(s) | Publication date (day/month/year) |
|---|---|---|---|
| JP 2018-154723 A | 04 October 2018 | (Family: none) | |
| JP 2022-184436 A | 13 December 2022 | EP 4349931 A1<br>entire text, all drawings<br>CN 117413035 A<br>WO 2022/255049 A1 | |
| WO 2021/225172 A1 | 11 November 2021 | US 2023/0174681 A1<br>entire text, all drawings<br>EP 4148088 A1 | |
| US 2015/0045480 A1 | 12 February 2015 | KR 10-1315784 B1 | |
| JP 2020-521651 A | 27 July 2020 | US 2020/0171698 A1<br>entire text, all drawings<br>WO 2018/215742 A1<br>CN 111051457 A | |
| JP 2019-536873 A | 19 December 2019 | US 2020/0308371 A1<br>entire text, all drawings<br>WO 2018/098065 A1<br>KR 10-2019-0082929 A<br>CN 110248966 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018154723 A